# FASCICULE DE BREVET EUROPEEN

(11) **EP 3 043 445 B1**
(45) Date de publication et mention de la délivrance du brevet: **15.04.2020**
(21) Numéro de dépôt: 15201667.1
(22) Date de dépôt: 21.12.2015
(51) Int. Cl.: H02J 7/14, H02J 7/34, F01D 19/00

(54) **GIRAVION DOTÉ D'UN ÉQUIPEMENT ÉLECTRIQUE RÉGULANT L'ALIMENTATION EN ÉNERGIE ÉLECTRIQUE D'UN TURBOMOTEUR EN PHASE DE DÉMARRAGE**
DREHFLÜGELFLUGZEUG, DAS MIT EINER ELEKTRISCHEN AUSRÜSTUNG AUSGESTATTET IST, DIE DIE EINSPEISUNG VON ELEKTRISCHER ENERGIE EINES TURBOMOTORS IN DER ANLASSPHASE REGULIERT
A ROTORCRAFT HAVING ELECTRICAL EQUIPMENT FOR REGULATING ELECTRICAL POWER SUPPLY TO AN ENGINE ON STARTING

(30) Priorité: 08.01.2015 FR 1500022
(43) Date de publication de la demande: 13.07.2016
(73) Titulaire: Airbus Helicopters, 13725 Marignane Cedex (FR)
(72) Inventeur: Jamot, Michel, 13100 AIX EN PROVENCE (FR)
(74) Mandataire: GPI & Associés

(56) Documents cités:
- FR-A1- 2 858 484
- US-A1- 2002 063 479
- US-A1- 2004 080 165
- US-B1- 6 233 935

## Description

L'invention est du domaine des giravions et relève plus particulièrement des modalités d'alimentation électrique en phase de démarrage d'un turbomoteur équipant un giravion.

Dans ce domaine, les documents suivants ont été consultés.

Outre le document US8752392 discuté plus bas, ont été considérés les documents US2002063479, FR2858484, US2004080165 et US6233935.

Le document US2002063479 décrit un turboalternateur, comprenant un compresseur configuré pour compresser un dispositif d'oxydation de carburant, une chambre de combustion reliée à un échappement du compresseur et configurée pour recevoir à la fois le combustible et un oxydant à brûler. Un carburateur est configuré pour contrôler la taille de gouttelettes de carburant fournies à la chambre de combustion afin de prévenir l'extinction d'turbogénérateur. Une turbine est fixée à l'échappement et configurée pour convertir la chaleur du gaz de combustion en énergie de rotation. Un moteur générateur est configuré pour convertir l'énergie de rotation en énergie électrique. Un arbre commun relie la turbine, le compresseur et ledit moteur générateur. Un contrôleur de puissance est configuré pour commander une pression d'alimentation du carburateur, un premier mécanisme d'injection de carburant à orifice variable, une seconde injection de combustible configurée à injecteurs séparés, un mécanisme de chauffage du combustible, un mécanisme de refroidissement configuré pour refroidir le combustible, et un champ électrique à l'intérieur de la chambre de combustion.

Le document FR2858484 décrit un système d'alimentation électrique d'un véhicule qui comprend une batterie. Un circuit élévateur élève la tension délivrée par la batterie à une tension élevée et délivre l'énergie électrique à tension élevée à une liaison d'alimentation électrique. Un condensateur comporte une première borne connectée à la batterie et une deuxième borne connectée à la borne de sortie du circuit élévateur pour emmagasiner une partie de l'énergie délivrée par le circuit élévateur de manière à augmenter une différence de potentiel électrique entre les bornes jusqu'à une valeur égale à une différence entre la tension élevée et la tension de source. Un dispositif commande le circuit élévateur de manière à ce qu'il délivre à la liaison d'alimentation et au condensateur l'énergie électrique à la tension élevée coïncidant avec une tension désirée supérieure à la tension de source.

Le document US2004080165 décrit un arrangement de commande pour turbogénérateur de motorisation de véhicule hybride. Pour le raccordement à un réseau de courant alternatif, l'arrangement comprend un générateur de courant alternatif, une turbine reliée fonctionnellement au générateur, un premier convertisseur connecté fonctionnellement au générateur, un deuxième convertisseur connecté de manière opérationnelle entre le premier convertisseur et une interface de distribution d'électricité; et un bus à courant continu connecté fonctionnellement aux premier et second convertisseurs. L'énergie est fournie au bus par l'intermédiaire du deuxième convertisseur dans un premier mode de mise en marche du turbogénérateur et la puissance est fournie à ce bus par le premier convertisseur dans un second mode de fonctionnement du turbogénérateur. La tension au bus est commandée par le premier convertisseur dans le second mode. Le générateur de courant alternatif fait partie d'un générateur à aimants permanents ou d'un générateur à induction. Un contrôle intégral proportionnel de vitesse prévoit un temps d'échantillonnage supérieur au temps d'échantillonnage d'un contrôle intégral proportionnel de puissance.

Le document US6233935 décrit une commande de démarrage d'un moteur à combustion interne pour véhicule automobile. Le démarreur étant accouplé au vilebrequin du moteur et un turbocompresseur pourvu d'une turbine, la commande prévoit de faire tourner le vilebrequin avec le démarreur pour déplacer les pistons accouplés au vilebrequin, d'utiliser l'air déplacé par ces pistons pour faire tourner la turbine et de faire démarrer le moteur lorsque le turbocompresseur atteint une vitesse prédéterminée. La vitesse du turbocompresseur est déduite en mesurant l'intervalle de temps pendant lequel les pistons ont déplacé de l'air. Le démarreur est un démarreur/alternateur.

La présente invention a plus particulièrement pour objet un giravion doté d'un circuit électrique. Ce circuit électrique régule l'alimentation en énergie électrique d'un turbomoteur de giravion en phase de démarrage à partir de l'exploitation de diverses sources d'énergie électrique alimentant un réseau électrique de bord du giravion, ci-après désigné par réseau de bord.

De telles sources d'énergie électrique diversifiées comprennent notamment au moins une source principale génératrice d'un courant électrique continu et au moins une source secondaire formée d'au moins un module de stockage d'énergie électrique composé d'organes à décharge.

Les giravions sont des aéronefs à voilure(s) tournante (s) dont la puissance mécanique nécessaire au fonctionnement du giravion est essentiellement fournie par un ou plusieurs moteurs, turbomoteur(s) notamment.

Pour rappel, un turbomoteur comprend dans sa généralité successivement un compresseur de gaz, une chambre de combustion d'un carburant et une turbine. En phase de démarrage du turbomoteur, le compresseur de gaz génère de l'air sous pression qui est monté en température dans la chambre de combustion, pour entraîner la turbine en rotation. En cours de fonctionnement autonome du turbomoteur, le compresseur de gaz est entraîné en rotation par la turbine.

Il se pose le problème de l'entraînement du turbomoteur au démarrage jusqu'à atteindre un seuil suffisant d'entraînement en rotation de la turbine pour permettre un fonctionnement autonome du turbomoteur.

A cet effet, le turbomoteur est équipé d'un moteur électrique annexe, ou démarreur, pour provoquer l'entraînement du compresseur de gaz jusqu'à parvenir audit seuil d'entraînement en rotation de la turbine.

Plus particulièrement, le démarreur entraîne mécaniquement le compresseur de gaz jusqu'à ce qu'un seuil de compression adapté soit atteint pour pouvoir injecter du carburant et mettre en fonctionnement le circuit d'allumage du turbomoteur. Le fonctionnement du démarreur est ensuite maintenu jusqu'à l'obtention d'une vitesse de rotation de la turbine suffisante pour permettre un fonctionnement autonome du turbomoteur.

Pendant la phase de démarrage du turbomoteur, le démarreur est alimenté en énergie électrique à partir du réseau de bord maintenu à une tension électrique de consigne, à titre indicatif de l'ordre de 28 V (vingt-huit volts).

L'énergie électrique alimentant le démarreur est fournie au moins par une source principale d'énergie électrique alimentant le réseau de bord, désignée ci-après par source principale. Une telle source principale est soit une source d'énergie électrique embarquée, notamment constituée d'au moins une batterie et/ou d'une machine électrique équipant le giravion, soit une source d'énergie électrique extérieure au giravion et exploitée au sol pour activer le démarreur.

Dans ce contexte, il est nécessaire de fournir une énergie électrique suffisante au démarreur pour entraîner le compresseur de gaz en phase de démarrage du turbomoteur, à l'encontre d'un couple résistant opposé par la turbine lors de sa mise en rotation et cela jusqu'à parvenir à une vitesse d'entraînement du compresseur de gaz permettant le fonctionnement autonome du turbomoteur.

Cependant, la fourniture d'énergie électrique par une source principale comprenant une ou plusieurs batterie(s) embarquée(s) à bord du giravion peut être insatisfaisante pour entraîner le démarreur en phase de démarrage du turbomoteur, principalement dans le cas où la (les) batterie(s) est (sont) utilisée(s) à des températures significativement basses ou si la (les) batterie(s) est (sont) déchargée(s).

Par suite, pour fournir une puissance électrique au démarrage du turbomoteur à partir de batteries embarquées à bord du giravion, il est nécessaire que les batteries disposent d'une réserve d'énergie confortable.

Cependant, équiper un giravion de batteries dimensionnées pour procurer un tel confort d'énergie présente l'inconvénient d'accroître la masse, l'encombrement voire aussi le nombre de batteries embarquées. De telles dispositions présentent l'inconvénient d'augmenter la charge embarquée à bord du giravion, ce qui est à éviter.

Dès lors, il a été proposé d'alimenter le démarreur en énergie électrique non seulement à partir de ladite source principale mais aussi à partir d'une source secondaire d'énergie électrique, désignée ci-après par source secondaire, composée d'une pluralité d'organes à décharge.

En effet, de tels organes à décharge sont aptes à procurer au démarreur un appoint ponctuel d'énergie électrique impulsionnelle de forte puissance, en complément de l'énergie électrique fournie par la source principale.

Les organes à décharge sont des composants électriques qui présentent l'avantage de permettre le stockage d'une quantité importante d'énergie électrique dans un volume restreint, en étant aptes à restituer cette énergie électrique sur une période courte, de l'ordre de quelques secondes.

Pour rappel, les organes à décharge sont notamment des supercondensateurs connus en eux-mêmes et agencés pour fournir une énergie électrique d'une puissance intermédiaire entre les puissances électriques fournies respectivement par une batterie et par des condensateurs électrolytiques.

On pourra à ce propos se reporter au document EP2264297 ou US8752392 qui décrit des modalités d'alimentation en énergie électrique du démarreur d'un turbomoteur de giravion, exploitant une dite source principale et une dite source secondaire formée d'un module composé d'une pluralité d'organes à décharge, ci-après désigné par module à décharge.

Il est plus particulièrement proposé par le document US8752392, d'exploiter un tel module à décharge pour fournir au réseau de bord, en phase de démarrage du turbomoteur, un appoint d'énergie électrique en complément de l'énergie électrique fournie par la source principale. Un convertisseur DC-DC bidirectionnel régule le fonctionnement du module à décharge en fonction des besoins en énergie électrique du démarreur déterminés selon la valeur d'au moins un paramètre identifiant l'évolution de la phase de démarrage du turbomoteur.

Il est apparu à l'usage que de telles modalités décrites par le document US8752392relatives à l'alimentation en énergie électrique d'un démarreur équipant un turbomoteur de giravion méritaient d'être perfectionnées.

Plus particulièrement, il est apparu utile d'organiser au mieux les échanges en énergie électrique entre le réseau de bord et les différentes sources d'énergie électrique exploitées pour alimenter le démarreur en énergie électrique au cours de la phase de démarrage du turbomoteur.

Dans ce cadre, la sécurisation et la fiabilité du réseau de bord ne doivent pas être affectées par les modalités mises en œuvre pour réguler l'alimentation en énergie électrique du démarreur, notamment d'une part sous l'effet de l'introduction dans le réseau de bord de l'énergie électrique fournie par les organes à décharges et d'autre part sous l'effet du rechargement des organes à décharge en énergie électrique à partir du réseau de bord.

En outre, une telle régulation doit s'inscrire dans le cadre des contraintes liées au maintien d'un courant électrique continu stable dans le réseau de bord, compte tenu de l'exploitation de l'énergie électrique fournie par le réseau de bord par une pluralité d'organes du giravion consommateurs d'énergie électrique.

De plus, il ne doit pas être perdu de vue qu'il est opportun d'organiser une telle régulation en tenant compte de la recherche constante en aéronautique d'une réduction de la masse et de l'encombrement des équipements embarqués à bord du giravion.

Dans ce contexte, le but de la présente invention est de proposer un giravion doté d'un équipement électrique procurant une régulation de l'alimentation en énergie électrique d'un démarreur équipant un turbomoteur du giravion, à partir d'un réseau de bord du giravion. Ce but est atteint par l'objet de la revendication 1.

Une telle régulation est plus spécifiquement recherchée par la présente invention dans le cadre d'une alimentation en énergie électrique du démarreur procurée par le réseau de bord à partir de l'exploitation de diverses sources d'énergie électrique.

Lesdites sources d'énergie diversifiées comprennent notamment au moins une dite source principale délivrant dans le réseau de bord du courant électrique continu et dont au moins un dit module à décharge délivrant dans le réseau de bord un courant électrique de forte puissance, sous contrôle d'un convertisseur DC-DC bidirectionnel permettant par ailleurs un rechargement du module à décharge à partir du réseau de bord.

Il est plus particulièrement recherché par la présente invention d'organiser ledit équipement électrique de manière à optimiser l'exploitation de l'énergie électrique stockée par les organes à décharge lors de la mise en fonctionnement du démarreur, tout en maintenant la sécurisation et la protection du réseau de bord à une tension électrique de consigne.

Une telle recherche est menée dans le cadre des contraintes précédemment énoncées, notamment relatives à la réduction autant que possible des masses embarquées à bord du giravion et à la protection du réseau de bord alimentant par ailleurs divers organes du giravion consommateurs d'énergie électrique.

Dans le contexte d'une telle recherche de régulation menée conformément à la démarche de la présente invention, il est plus particulièrement constaté :
- que dans le contexte d'un montage en parallèle du module à décharge et de la source principale, un dimensionnement optimal du module à décharge est limité compte-tenu des limites de la tension électrique admissible par le réseau de bord et par le démarreur. A titre indicatif, un module à décharge chargé initialement à 28 V (28 volts), dont la tension en fin de décharge serait de 18 V, est exploité seulement à 58% de sa capacité énergétique. Il est en conséquence opportun de rechercher une optimisation du dimensionnement du module à décharge sous condition d'une exploitation optimale de ses ressources en énergie électrique.
- que dans le contexte d'un montage en série du module à décharge et de la source principale, une pleine exploitation de l'énergie électrique stockée par les organes à décharge peut être avantageusement obtenue. Cependant, une telle solution implique une complexification de l'organisation et des modalités de fonctionnement du réseau de bord qu'il est souhaitable d'éviter.
- que l'intensité importante du courant électrique délivré par le module à décharge en phase de démarrage du turbomoteur implique des difficultés de dimensionnement des organes électriques de protection du réseau de bord.
- que l'énergie électrique délivrée par le module à décharge en phase de démarrage du turbomoteur peut induire des fournitures transitoires de courant importantes dans le démarreur et par suite des pics de couple électromoteur pouvant nuire à la durée de vie des organes mécaniques du turbomoteur, turbine notamment.

Sur la base du constat qui vient d'être fait, la présente invention propose d'exploiter un convertisseur DC-DC bidirectionnel de type statique, ci-après dénommé convertisseur statique principal, monté en série avec le module à décharge pour réguler son fonctionnement.

Par ailleurs, un dispositif de régulation du fonctionnement dudit convertisseur statique principal maintient l'équivalence d'intensité entre l'intensité du courant électrique fourni au réseau de bord par le module à décharge et l'intensité du courant électrique du réseau de bord lui-même. Une telle régulation du fonctionnement du convertisseur statique principal est notamment opérée à partir d'une surveillance par le dispositif de régulation d'une part de la tension électrique de l'énergie électrique stockée par le module à décharge et d'autre part de la tension électrique du réseau de bord.

A partir de lois de commande spécifiques du fonctionnement dudit convertisseur statique principal mises en œuvre par le dispositif de régulation, l'efficience du transfert énergétique entre le module à décharge et le réseau de bord est optimisée, tout en maintenant la tension électrique du réseau de bord aux niveaux requis par les différents consommateurs d'énergie électrique alimentés par le réseau de bord.

Une telle optimisation dudit transfert énergétique permet une exploitation optimale, potentiellement en totalité, de l'énergie électrique stockée par le module à décharge ainsi qu'un rechargement rapide au moment opportun du module à décharge.

En outre, l'encombrement et la masse des différentes sources d'énergie électrique exploitées pour fournir au démarreur l'énergie électrique requise, peuvent être au mieux limités sans affecter la fourniture de l'énergie électrique nécessaire au démarreur pour procurer l'entraînement de la turbine, et cela sans pénaliser ni la fourniture par le réseau de bord de l'énergie électrique nécessaire aux divers consommateurs d'énergie électrique du giravion ni la protection du réseau de bord vis-à-vis d'une surtension électrique.

Par ailleurs, l'énergie électrique stockée par le module à décharge peut être exploitée sous contrôle du dispositif de régulation hors phase de démarrage du turbomoteur pour fournir si besoin de l'énergie électrique au réseau de bord en cas d'une baisse significative de sa tension électrique.

Plus particulièrement, un giravion conforme à la présente invention est équipé d'au moins un turbomoteur comprenant un compresseur de gaz et une turbine. Le turbomoteur est indifféremment du type à turbine liée, selon lequel la turbine est liée en rotation au compresseur de gaz par un arbre de travail, ou du type à turbine libre, le compresseur de gaz et la turbine étant liés à des arbres respectifs.

Le turbomoteur est muni d'un démarreur d'entraînement du compresseur de gaz, et par suite de la turbine, en phase de démarrage du turbomoteur. La mise en œuvre du démarreur est placée sous la dépendance d'un circuit électrique connecté, par l'intermédiaire d'un bus de connexion, à un réseau électrique de bord délivrant du courant électrique continu, dénommé réseau de bord, maintenu à une tension électrique de consigne.

Ledit circuit électrique régule l'alimentation en énergie électrique du démarreur à partir de diverses sources d'énergie électrique dont au moins une source principale d'énergie électrique délivrant du courant continu, dénommée source principale, et dont au moins une source secondaire d'énergie électrique formée d'au moins un module regroupant des organes à décharge, dénommé module à décharge.

Le fonctionnement du module à décharge est placé sous la dépendance d'un convertisseur DC-DC bidirectionnel conformément à deux modes de fonctionnement du module à décharge, dont un mode de fonctionnement dit mode de décharge et un mode de fonctionnement dit mode de rechargement.

Conformément audit mode de décharge, le convertisseur DC-DC bidirectionnel contrôle la délivrance dans le réseau de bord de l'énergie électrique stockée dans le module à décharge, en fonction de la valeur d'au moins un paramètre identifiant l'évolution de la phase de démarrage du turbomoteur.

Ces dispositions sont telles que l'énergie électrique délivrée par le module à décharge fournit, en phase de démarrage du turbomoteur, un appoint d'énergie électrique au réseau de bord en complément de l'énergie électrique fournie au réseau de bord par ladite au moins une source principale.

Conformément audit mode de rechargement, le convertisseur DC-DC bidirectionnel régule le rechargement depuis le réseau de bord du module à décharge par le courant électrique fourni par ladite au moins une source principale.

Dans ce contexte, le giravion de la présente invention est principalement reconnaissable en ce que ledit circuit électrique comprend le module à décharge et est monté en parallèle avec la source principale.

En outre, les organes à décharge sont montés en série sur le module à décharge, lui-même monté en série avec ledit convertisseur DC-DC bidirectionnel sur le circuit électrique.

Par ailleurs, ledit convertisseur DC-DC bidirectionnel est plus spécifiquement constitué d'un convertisseur statique DC-DC bidirectionnel, ci-après dénommé convertisseur statique principal, comprenant au moins une architecture de puissance électrique et un hacheur à N phases déphasées de 2π/N.

En outre, un dispositif de régulation contrôle le fonctionnement de ladite architecture de puissance électrique du convertisseur statique principal. Le dispositif de régulation au moins maintient l'équivalence d'intensité entre l'intensité du courant électrique du circuit électrique et l'intensité du courant électrique du réseau de bord, quel que soit le mode de fonctionnement du module à décharge et par surveillance de la tension électrique du module à décharge et de la tension électrique du réseau de bord.

Le dispositif de régulation comporte plus spécifiquement une boucle de régulation primaire contrôlant ladite équivalence d'intensité, en fonction de l'identification par des boucles de régulation secondaires, respectivement au moins de la tension électrique du réseau de bord et de la tension électrique du module à décharge.

Une telle boucle de régulation primaire procure une protection du réseau de bord et/ou des organes électroniques du convertisseur statique principal. En outre, la boucle de régulation primaire permet de conforter la stabilité du réseau de bord, notamment vis-à-vis d'un maintien stable de sa tension électrique.

De préférence, le circuit électrique comporte une bascule autorisant sélectivement l'activation du mode de décharge et l'activation du mode de rechargement du module à décharge par le convertisseur statique principal. La bascule est en position spontanée d'autorisation d'une activation du mode de rechargement et est pilotée en position d'autorisation d'une activation du mode de décharge par réception d'une donnée relative à l'activation de la phase de démarrage du turbomoteur, notamment opérée par un personnel de bord du giravion.

Plus particulièrement en mode de rechargement, la boucle de régulation primaire est commandée par une première dite boucle de régulation secondaire régulant la tension électrique du module à décharge.

Plus particulièrement encore en mode de décharge, la boucle de régulation primaire est commandée par une deuxième dite boucle de régulation secondaire régulant, conformément à une tension électrique de référence, la tension électrique du courant électrique délivré par le circuit électrique au réseau de bord à travers ledit bus de connexion.

La boucle de régulation primaire maintient une tension électrique du réseau de bord apte à procurer la mise en œuvre du démarreur à un couple d'entraînement de la turbine requis en fonction de la valeur dudit au moins un paramètre identifiant l'évolution de la phase de démarrage du turbomoteur.

Par exemple, la tension électrique de référence est d'une valeur fixe prédéfinie identifiée selon le couple apte à être développé par le démarreur conformément à ses caractéristiques techniques.

De telles dispositions permettent au démarreur de fournir ledit couple d'entraînement de la turbine requis pour entraîner le compresseur de gaz du turbomoteur à partir du choix adapté de la valeur de ladite tension électrique de référence.

Par exemple encore et de préférence, la tension électrique de référence est identifiée par une troisième boucle de régulation secondaire prenant en compte indifféremment le couple et/ou la vitesse de rotation du démarreur à un instant considéré et/ou l'intensité du courant électrique délivré au démarreur par le réseau de bord.

L'identification par la troisième boucle de régulation secondaire de la valeur de la tension électrique de référence permet de fournir l'énergie électrique nécessaire au démarreur en fonction précisément de ses besoins en énergie électrique pour entraîner la turbine en phase de démarrage du turbomoteur.

En outre, la délivrance d'énergie électrique par le module à décharge au cours de la phase de démarrage du turbomoteur est optimisée tout en préservant le réseau de bord d'une surtension électrique.

Selon une forme de réalisation, le dispositif de régulation intègre une fonction d'inhibition dudit hacheur sous condition d'une tension électrique du module à décharge conforme à une tension électrique comprise dans une plage prédéterminée de valeurs admissibles, notamment vis-à-vis de la protection du réseau de bord d'un cas de surtension électrique.

Le hacheur du convertisseur statique principal comporte par exemple N phases constituées d'interrupteurs statiques de puissance contrôlés en mode entrelacé, afin d'exploiter au mieux la masse et le volume des organes de filtrage du hacheur.

Selon une variante, le hacheur du convertisseur statique principal comporte N phases constituées de transformateurs à haute fréquence étagés. Un isolement galvanique est alors de préférence interposé entre le module à décharge et ledit bus de connexion. Un tel isolement galvanique permet d'optimiser la liberté de choix de la tension électrique du module à décharge selon la complexité structurelle du convertisseur statique principal.

Selon une forme de réalisation, un convertisseur statique DC-DC bidirectionnel, dénommé convertisseur statique secondaire, est interposé entre la source principale et le réseau de bord. Le convertisseur statique secondaire régule la tension électrique du courant électrique délivré par la source principale conformément à une tension électrique de consigne du réseau de bord.

Le convertisseur statique secondaire permet d'optimiser l'exploitation du volume et de la masse des organes de stockage en énergie électrique respectivement de la source principale et du module à décharge. Le démarrage du turbomoteur peut être procuré à partir d'un nombre réduit d'organes à décharge intégrés au module à décharge.

En effet, le convertisseur statique secondaire autorise une faible tension électrique de la source principale, notamment en phase de démarrage du turbomoteur, en raison de la faculté du convertisseur statique secondaire à adapter la tension électrique de l'énergie électrique fournie par la source principale selon les besoins en énergie électrique du réseau de bord et plus particulièrement selon les besoins en énergie électrique des organes consommateurs d'énergie électrique alimentés à partir du réseau de bord.

Le module à décharge et le convertisseur statique principal sont potentiellement regroupés dans un même premier composant électrique. Le dispositif de régulation et le convertisseur statique principal sont aussi potentiellement intégrés dans un même deuxième composant électrique.

Selon une forme préférée de réalisation, le module à décharge, le convertisseur statique principal et le dispositif de régulation sont regroupés dans un même équipement électrique.

Ledit au moins un paramètre identifiant l'évolution de la phase de démarrage du turbomoteur est de préférence l'un quelconque au moins des paramètres comprenant au moins un paramètre identifiant la vitesse de rotation du démarreur et/ou la vitesse d'entraînement en rotation de la turbine, un paramètre identifiant le couple résistant opposé par la turbine à l'encontre de la rotation du démarreur et un paramètre identifiant l'intensité du courant électrique fourni au démarreur par le réseau de bord.

Par ailleurs, il est préféré de placer un contacteur sur le circuit électrique pour isoler le module à décharge vis-à-vis du réseau de bord. Un tel contacteur est indifféremment un contacteur électromécanique ou un contacteur statique. Le contacteur est notamment activable par un personnel de bord du giravion et/ou par le dispositif de régulation en cas de détection d'une surtension électrique dans le réseau de bord.

De telles dispositions visent à protéger le réseau de bord vis-à-vis d'une éventuelle surtension électrique sous l'effet de la délivrance par le circuit électrique vers le réseau de bord de l'énergie électrique stockée par le module à décharge.

Il est à noter que le module à décharge et/ou la source principale, notamment dans le cas où la source principale est constituée d'au moins une batterie dédiée au démarrage du turbomoteur, sont avantageusement des organes montés amovibles à bord du giravion pour autoriser leur retrait après démarrage du turbomoteur et réduire ainsi la charge embarquée à bord du giravion en vol.

Parmi les avantages procurés par la présente invention, il est à relever les avantages suivants.

L'énergie électrique stockée par le module à décharge peut être utilisée dans sa quasi-totalité, à partir du contrôle opéré par le dispositif de régulation sur le fonctionnement du convertisseur statique principal. Il en ressort que la masse, le volume et les coûts d'obtention du module à décharge sont au mieux mis à profit.

L'énergie électrique fournie par le module à décharge peut être délivrée au cours de la phase de démarrage du turbomoteur sous contrôle du convertisseur statique principal dont le fonctionnement, régulé par le dispositif de régulation, permet :
- un contrôle de la tension électrique du réseau de bord à un seuil requis de tension électrique en fonction du couple développé par le démarreur et/ou en fonction de la vitesse d'entraînement du démarreur, préférentiellement considérés en combinaison,
- un contrôle du couple développé par le démarreur à partir de la valeur de paramètres de calcul aisément accessibles, tel que par exemple l'intensité du courant électrique délivré au démarreur par le réseau de bord.

En outre, la boucle de régulation primaire peut être une boucle de régulation rapide procurant une protection du convertisseur statique principal et une stabilité de la tension électrique du réseau de bord lors de la délivrance d'énergie électrique par le module à décharge sous contrôle du convertisseur statique principal dont le fonctionnement est régulé par le dispositif de régulation.

Une telle boucle de régulation rapide permet aussi un rechargement rapide du module à décharge, sur une durée de l'ordre de quelques dixièmes de secondes.

Les avantages procurés par la présente invention sont notamment obtenus sans accroissement de masse du convertisseur statique principal vis-à-vis de certains convertisseurs connus calibré pour procurer un rechargement rapide du module à décharge.

De plus, le circuit électrique peut être aisément greffé sur un réseau de bord existant, sans modification majeure dudit réseau de bord existant.

Le circuit électrique est aussi apte à procurer au démarreur l'énergie électrique nécessaire à l'entraînement de la turbine en phase de démarrage du turbomoteur, y compris à des températures basses susceptibles d'affecter la capacité d'une batterie, constituant la source principale, à délivrer un courant électrique à une tension électrique adaptée, et cela quel que soit le nombre de démarreurs équipant respectivement une pluralité de turbomoteurs équipant le giravion.

En outre, l'énergie électrique stockée par le module à décharge peut être exploitée en vol pour procurer au réseau de bord un appoint d'énergie électrique en cas de besoin, notamment en fonction de l'énergie électrique requise à un instant donné par les différents consommateurs d'énergie électrique alimentés à partir du réseau de bord.

Un exemple de réalisation de la présente invention va être décrit en relation avec les figures de la planche annexée, dans laquelle :
- la fig.1 est un schéma illustrant un équipement électrique d'un giravion conforme à la présente invention, permettant de réguler la délivrance d'énergie électrique au démarreur d'un turbomoteur en phase de démarrage.
- la fig.2 est un schéma détaillant un exemple de réalisation de l'équipement électrique représenté sur la fig.1.

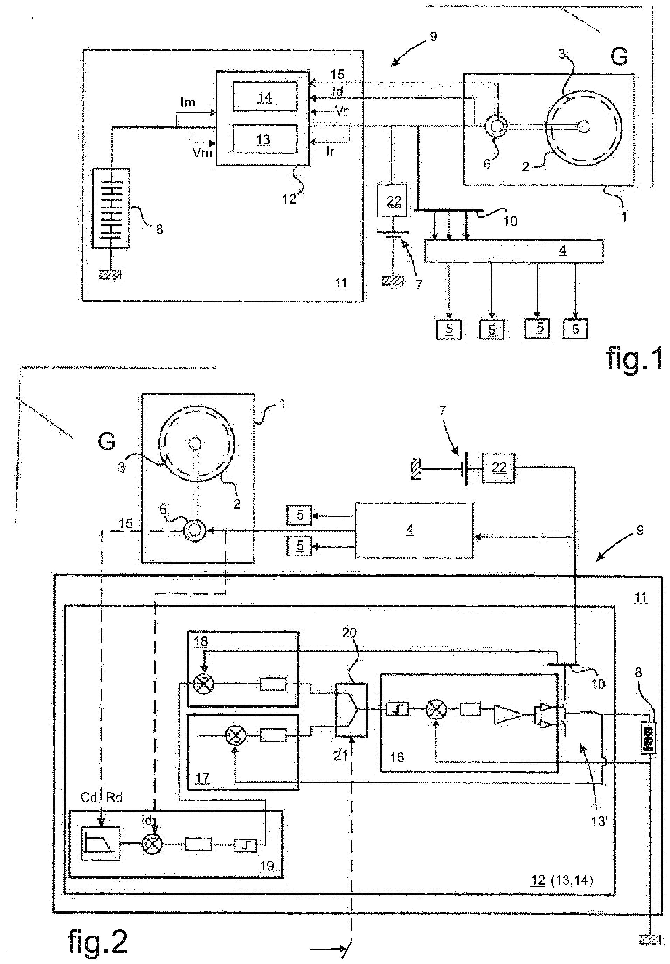

Sur les fig.1 et fig.2, un giravion est représenté par la référence G. Ce giravion G est équipé d'au moins un turbomoteur 1 procurant au giravion la puissance mécanique nécessaire à son fonctionnement. Le turbomoteur 1 comporte classiquement un compresseur de gaz 2 et une turbine 3.

Lors du démarrage du turbomoteur 1, le compresseur de gaz 2 génère de l'air sous pression qui est monté en température dans une chambre de combustion pour entraîner la turbine 3 en rotation. En cours de fonctionnement autonome du turbomoteur 1, le compresseur de gaz 2 est entraîné en rotation par la turbine 3.

Par ailleurs, le giravion est équipé d'un réseau de bord 4 permettant d'alimenter en courant électrique continu divers consommateurs d'énergie électrique 5 équipant le giravion. Le réseau de bord 4 fourni un courant électrique à une tension électrique de consigne, à titre indicatif de l'ordre de 28 V.

Le démarrage du turbomoteur 1 est initié par un démarreur 6 formé d'un moteur électrique annexe alimenté en énergie électrique à partir du réseau de bord 4. En phase de démarrage du turbomoteur 1, le démarreur 6 permet d'entraîner le compresseur de gaz 2 jusqu'à atteindre un seuil suffisant d'entraînement de la turbine 3 pour permettre un fonctionnement autonome du turbomoteur 1.

Le démarreur 6 est alimenté en énergie électrique par exploitation d'une source principale 7 d'énergie électrique et d'une source secondaire 8 d'énergie électrique.

La source principale 7, telle qu'au moins formée d'une batterie sur l'exemple illustré, délivre du courant électrique continu au réseau de bord 4 à ladite tension électrique de consigne.

La source secondaire est formée d'au moins un module à décharge 8 comprenant une pluralité d'organes à décharge montés en série. A titre indicatif, les organes à décharge sont par exemple regroupés par douzaine en étant d'une capacité individuelle de l'ordre de 3000 F (trois milles Farad), pour une tension unitaire de l'ordre de 2,7 V.

Dans ce contexte, le giravion est muni d'un circuit électrique 9 relié au réseau de bord 4 par l'intermédiaire d'un bus de connexion 10.

Ledit circuit électrique 9 comporte un équipement électrique 11 regroupant le module à décharge 8, ainsi qu'un composant électrique 12 intégrant un convertisseur statique principal 13 DC-DC bidirectionnel et un dispositif de régulation 14 du fonctionnement du convertisseur statique principal 13.

Le convertisseur statique principal 13 comporte une architecture de puissance électrique et un hacheur 13' à N phases, de préférence déphasées de 2π/N. Le convertisseur statique principal 13 est monté en série sur le circuit électrique 9 avec le module à décharge 8.

Le convertisseur statique principal 13 contrôle, sous dépendance de la régulation de son fonctionnement par le dispositif de régulation 14, d'une part la délivrance vers le réseau de bord 4 de l'énergie électrique stockée par le module à décharge 8 et d'autre part le rechargement en énergie électrique du module à décharge 8 depuis le réseau de bord 4.

Le dispositif de régulation 14 régule le fonctionnement du convertisseur statique principal 13 en fonction de la valeur d'au moins un paramètre 15 identifiant l'évolution de la phase de démarrage du turbomoteur 1, tel que par exemple le couple développé par le démarreur 6 et/ou sa vitesse de rotation, voire encore en fonction de l'intensité Id du courant électrique fourni au démarreur 6 par le réseau de bord 4.

Par ailleurs, le dispositif de régulation 14 opère une surveillance des caractéristiques (tension électrique Vm et intensité électrique Im) de l'énergie électrique stockée dans le module à décharge 8 et des caractéristiques (tension électrique Vr et intensité électrique Ir) du courant électrique du réseau de bord 4.

A partir d'une telle surveillance, le dispositif de régulation 14 maintien l'équivalence entre l'intensité Ir du courant électrique du réseau de bord 4 et l'intensité du courant électrique délivré par le circuit électrique 9 vers le réseau de bord 4 à partir d'une exploitation de l'énergie électrique stockée par le module à décharge 8 placée sous contrôle du convertisseur statique principal 13 lui-même placé sous dépendance du dispositif de régulation 14.

Sur la fig.2 plus particulièrement, le dispositif de régulation 14 comporte une boucle de régulation primaire 16 contrôlant ladite équivalence d'intensité du courant électrique en fonction de la tension électrique Vr du réseau de bord 4 et de la tension électrique Vm du module à décharge 8. Le fonctionnement de la boucle de régulation primaire 16 est placé sous la dépendance de plusieurs boucles de régulation secondaires.

Une première boucle de régulation secondaire 17 contrôle la tension électrique Vm du module à décharge 8 en mode de rechargement en énergie électrique à partir du réseau de bord 4. Une deuxième boucle de régulation secondaire 18 contrôle la tension électrique Vb du courant électrique délivré par le l'intermédiaire du bus de connexion 10 au réseau de bord 4, conformément à une tension électrique de référence.

La tension électrique de référence est potentiellement d'une valeur prédéfinie selon les caractéristiques techniques du démarreur 6.

Sur l'exemple illustré, la tension électrique de référence est identifiée par une troisième boucle de régulation secondaire 19 prenant en compte le couple développé Cd et/ou la vitesse de rotation Rd du démarreur 6, voire encore l'intensité Id du courant électrique délivré au démarreur 6 par le réseau de bord 4.

Le circuit électrique 9 comporte une bascule 20 placée en interposition entre les boucles de régulation secondaires 17,18,19 et la boucle de régulation primaire 16. La bascule 20 autorise sélectivement le rechargement du module à décharge 8 à partir du réseau de bord 4 ou inversement la délivrance de l'énergie électrique stockée par le module à décharge 8 vers le réseau de bord 4 opérés par le convertisseur statique principal 13 sous contrôle du dispositif de régulation 14.

La bascule 20 est spontanément maintenue en position autorisant le rechargement du module à décharge 8 et est pilotée pour autoriser la délivrance de l'énergie électrique stockée dans le module à décharge 8, la bascule 20 étant pilotée à réception d'une donnée 21 relative à l'activation de la phase de démarrage du turbomoteur 1.

Subsidiairement, la source principale 7 formée par la batterie est équipée d'un convertisseur statique secondaire 22 DC-DC bidirectionnel contrôlant le fonctionnement de ladite batterie. Le convertisseur statique secondaire 22 contrôle plus particulièrement d'une part la délivrance d'énergie électrique par la source principale 7 vers le réseau de bord 4 à sa tension électrique de consigne et d'autre part un rechargement de la source principale 7 depuis le réseau de bord 4.

Selon une forme de réalisation, les organes à décharge, et notamment au moins un module 8, forment au moins en partie un accessoire qui est monté de manière amovible sur le réseau 4. Ici, accessoire désigne la faculté offerte d'installation ou non d'un groupe d'organes à décharge sur le réseau, sans affecter la continuité électrique du réseau nécessaire à son fonctionnement, notamment en cas de retrait d'un module. Un tel accessoire est susceptible d'être installé et exploité optionnellement selon les besoins, en étant installé à bord du giravion G en cas de nécessité tel qu'en cas de basses températures. Lorsque l'accessoire n'est pas indispensable, il peut être retiré du réseau sans affecter son fonctionnement pour éviter d'embarquer à bord de l'hélicoptère une charge inutile.

## Revendications

1. Giravion (G) équipé d'un circuit électrique (9) et d'au moins un turbomoteur (1) comprenant un compresseur de gaz (2) et une turbine (3), le turbomoteur (1) étant muni d'un démarreur (6) pour l'entraînement du compresseur de gaz (2) lors d'une phase de démarrage du turbomoteur (1), le circuit électrique (9) étant connecté par l'intermédiaire d'un bus de connexion (10) à un réseau électrique de bord (4) de fourniture de courant électrique continu pour la mise en œuvre du démarreur (6) sous la dépendance du circuit électrique (9), le réseau électrique de bord (4) étant maintenu à une tension électrique de consigne lors de la phase de démarrage par régulation de l'alimentation en énergie électrique du démarreur (6) par le circuit électrique (9), à partir de diverses sources d'énergie électrique dont au moins une source principale (7) d'énergie électrique délivrant du courant continu, et dont au moins une source secondaire d'énergie électrique , le fonctionnement de la source secondaire étant placé sous la dépendance d'un convertisseur DC-DC bidirectionnel conformément à deux modes de fonctionnement de la source secondaire dont :
- un mode de fonctionnement dit mode de décharge, selon lequel le convertisseur DC-DC bidirectionnel contrôle la délivrance d'énergie électrique par la source secondaire en fonction de la valeur d'au moins un paramètre (15) identifiant l'évolution de la phase de démarrage du turbomoteur (1), de sorte que l'énergie électrique délivrée par la source secondaire fournit, en phase de démarrage du turbomoteur (1), un appoint d'énergie électrique au réseau de bord (4) en complément de l'énergie électrique fournie au réseau de bord (4) par la source principale (7), et
- un mode de fonctionnement dit mode de rechargement, selon lequel le convertisseur DC-DC bidirectionnel régule le rechargement depuis le réseau de bord (4) de la source secondaire par le courant électrique fourni par la source principale (7),
la source secondaire du circuit électrique (9) est montée en parallèle avec la source principale (7),
la source secondaire regroupe des organes à décharge qui sont montés en série en série avec le convertisseur DC-DC bidirectionnel sur le circuit électrique (9),
**caractérisé en ce que** la source secondaire regroupe des organes à décharge qui sont montés en série sur un module à décharge (8) de la source secondaire et le convertisseur DC-DC bidirectionnel est un convertisseur statique principal (13) qui comprend au moins une architecture de puissance électrique et un hacheur (13') à N phases déphasées de 2π/N,
un dispositif de régulation (14) comportant une boucle de régulation primaire (16) et contrôlant le fonctionnement de la architecture de puissance électrique du convertisseur statique principal (13), au moins en maintenant en phase de démarrage du turbomoteur (1) l'équivalence d'intensité du courant électrique entre l'intensité du courant électrique du circuit électrique (9) et l'intensité du courant électrique du réseau de bord (4), quel que soit le mode de fonctionnement du module à décharge (8) et par surveillance de la tension électrique (Vm) du module à décharge (8) et de la tension électrique (Vr) du réseau de bord (4).

2. Giravion (G) selon la revendication 1,
**caractérisé en ce que** le dispositif de régulation (14) comporte des boucles de régulation secondaires (17,18,19) en plus de la boucle de régulation primaire (16) qui contrôle ladite équivalence d'intensité du courant électrique en fonction de l'identification par les boucles de régulation secondaires (17,18,19) de respectivement au moins de la tension électrique (Vr) du réseau de bord (4) et de la tension électrique (Vm) du module à décharge (8).

3. Giravion (G) selon l'une quelconque des revendications 1 et 2,
**caractérisé en ce que** le circuit électrique (9) comporte une bascule (20) autorisant sélectivement l'activation du mode de décharge et l'activation du mode de rechargement du module à décharge (8) par le convertisseur statique principal (13), la bascule (20) étant en position spontanée d'autorisation d'une activation du mode de rechargement et étant pilotée en position d'autorisation d'une activation du mode de décharge par réception d'une donnée (21) relative à l'activation de la phase de démarrage du turbomoteur (1).

4. Giravion (G) selon la revendication 2,
**caractérisé en ce qu'**en mode de rechargement, la boucle de régulation primaire (16) est commandée par une première dite boucle de régulation secondaire (17) régulant la tension électrique du module à décharge (8).

5. Giravion (G) selon la revendication 2,
**caractérisé en ce qu'**en mode de décharge, la boucle de régulation primaire (16) est commandée par une deuxième dite boucle de régulation secondaire (18) régulant, conformément à une tension électrique de référence, la tension électrique du courant électrique délivré par le circuit électrique (9) au réseau de bord (4) à travers ledit bus de connexion (10), la boucle de régulation primaire (16) maintenant une tension électrique du réseau de bord (4) apte à procurer la mise en œuvre du démarreur (6) à un couple d'entraînement de la turbine (3) requis en fonction de la valeur dudit au moins un paramètre (15) identifiant l'évolution de la phase de démarrage du turbomoteur (1).

6. Giravion (G) selon la revendication 5,
**caractérisé en ce que** la tension électrique de référence est d'une valeur fixe prédéfinie identifiée selon le couple apte à être développé par le démarreur (6) conformément à ses caractéristiques techniques.

7. Giravion (G) selon la revendication 5,
**caractérisé en ce que** la tension électrique de référence est identifiée par une troisième boucle de régulation secondaire (19) prenant en compte indifféremment le couple (Cd) et/ou la vitesse (Rd) de rotation du démarreur (6) à un instant considéré et/ou l'intensité (Id) du courant électrique délivré au démarreur (6) par le réseau de bord (4).

8. Giravion (G) selon l'une quelconque des revendications 1 à 7,
**caractérisé en ce que** le dispositif de régulation (14) intègre une fonction d'inhibition dudit hacheur (13') sous condition d'une tension électrique du module à décharge (8) conforme à une tension électrique comprise dans une plage prédéterminée de valeurs admissibles.

9. Giravion (G) selon l'une quelconque des revendications 1 à 8,
**caractérisé en ce que** le hacheur (13') du convertisseur statique principal (13) comporte N phases constituées d'interrupteurs statiques de puissance contrôlés en mode entrelacé.

10. Giravion (G) selon l'une quelconque des revendications 1 à 8,
**caractérisé en ce que** le hacheur (13') du convertisseur statique principal (13) comporte N phases constituées de transformateurs à haute fréquence étagés, un isolement galvanique étant interposé entre le module à décharge (8) et ledit bus de connexion (10).

11. Giravion (G) selon l'une quelconque des revendications 1 à 10,
**caractérisé en ce qu'**un convertisseur statique DC-DC bidirectionnel, dénommé convertisseur statique secondaire (22), est interposé entre la source principale (7) et le réseau de bord (4) en régulant la tension électrique du courant électrique délivrée par la source principale (7) conformément à une tension électrique de consigne du réseau de bord (4).

12. Giravion (G) selon l'une quelconque des revendications 1 à 11,
**caractérisé en ce que** le module à décharge (8) et le convertisseur statique principal (13) sont regroupés dans un même premier composant électrique.

13. Giravion (G) selon l'une quelconque des revendications 1 à 12,
**caractérisé en ce que** le dispositif de régulation (14) et le convertisseur statique principal (13) sont intégrés dans un même deuxième composant électrique (12).

14. Giravion (G) selon l'une quelconque les revendications 1 à 13,
**caractérisé en ce que** le module à décharge (8), le convertisseur statique principal (13) et le dispositif de régulation (14) sont regroupés dans un même équipement électrique (11).

15. Giravion (G) selon l'une quelconque des revendications 1 à 14,
**caractérisé en ce que** ledit au moins un paramètre (15) identifiant l'évolution de la phase de démarrage du turbomoteur (1) est l'un quelconque au moins des paramètres comprenant :
- au moins un paramètre identifiant la vitesse (Rd) de rotation du démarreur (6) et/ou la vitesse d'entraînement en rotation de la turbine (3),
- un paramètre identifiant le couple résistant opposé par la turbine à l'encontre de la rotation du démarreur (8),
- un paramètre identifiant l'intensité (Id) du courant électrique fourni au démarreur (6) par le réseau de bord (4).

## Patentansprüche

1. Drehflügelflugzeug (G) mit einem elektrischen Schaltkreis (9) und mindestens einem Turbomotor (1), der einen Gaskompressor (2) und eine Turbine (3) umfasst, wobei der Turbomotor (1) einen Anlasser (6) zum Antreiben des Gaskompressors (2) während einer Startphase des Turbomotors (1) aufweist, wobei der elektrische Schaltkreis (9) über einen Verbindungsbus (10) mit einem elektrischen Bordnetz (4) verbunden ist, um elektrischen Gleichstrom für den Betrieb des Anlassers (6) in Abhängigkeit von dem elektrischen Schaltkreis (9) zu liefern, wobei das Bordnetz (4) während der Startphase auf einer elektrischen Soll-Spannung gehalten wird durch Regeln der elektrischen Energieversorgung des Anlassers (6) über den elektrischen Schaltkreis (9) aus verschiedenen elektrischen Energiequellen, darunter mindestens eine Hauptquelle (7) für elektrische Energie, die Gleichstrom liefert, und mindestens eine Sekundärquelle für elektrische Energie, wobei der Betrieb der Sekundärquelle in zwei Betriebsarten der Abhängigkeit von einem bidirektionalen Gleichspannungswandler unterliegt, darunter:
- eine Betriebsart, als Entladebetriebsart bezeichnet, bei der der bidirektionale Gleichspannungswandler die Lieferung von elektrischer Energie durch die Sekundärquelle in Abhängigkeit vom Wert mindestens eines Parameters (15) steuert, der die Entwicklung der Startphase des Turbomotors (1) angibt, so dass die von der Sekundärquelle gelieferte elektrische Energie in der Startphase des Turbomotors (1) zusätzlich zu der von der Hauptquelle (7) an das Bordnetz (4) gelieferten elektrischen Energie eine Ergänzung der elektrischen Energie an das Bordnetz (4) liefert, und
- eine Betriebsart, als Nachladebetriebsart bezeichnet, bei der der bidirektionale Gleichspannungswandler das Nachladen der Sekundärquelle aus dem Bordnetz (4) durch den von der Hauptquelle (7) gelieferten elektrischen Strom regelt,
wobei die Sekundärquelle der elektrischen Schaltung (9) parallel zur Hauptquelle (7) geschaltet ist,
wobei die Sekundärquelle Entladungselemente umfasst, die in dem elektrischen Schaltkreis mit dem bidirektionalen DC-DC-Wandler in Reihe geschaltet sind (9),
**dadurch gekennzeichnet, dass** die Sekundärquelle Entladungselemente umfasst, die in einem Entladungsmodul (8) der Sekundärquelle in Reihe geschaltet sind, und der bidirektionale Gleichspannungswandler ein statischer Hauptwandler (13) ist, der mindestens eine elektrische Leistungsarchitektur und einen Unterbrecher (13') mit N Phasen, die um 2π/N phasenverschoben sind, umfasst,
dass eine Regelvorrichtung (14) einen primären Regelkreis (16) umfasst und den Betrieb der elektrischen Leistungsarchitektur des statischen Hauptwandlers (13) zumindest dadurch steuert, dass in der Startphase des Turbomotors (1) die Gleichwertigkeit der elektrischen Stromstärke zwischen der elektrischen Stromstärke des elektrischen Stromkreises (9) und der elektrischen Stromstärke des Bordnetzes (4) unabhängig von der Betriebsart des Entladungsmoduls (8) aufrechterhalten wird und dass die elektrische Spannung (Vm) des Entladungsmoduls (8) und die elektrische Spannung (Vr) des Bordnetzes (4) überwacht werden.

2. Drehflügelflugzeug (G) nach Anspruch 1,
**dadurch gekennzeichnet, dass** die Regelvorrichtung (14) sekundäre Regelkreise (17, 18, 19) zusätzlich zu dem primären Regelkreis (16) umfasst, der die besagte Gleichwertigkeit der elektrischen Stromstärke in Abhängigkeit von der Angabe mindestens der elektrischen Spannung (Vr) des Bordnetzes (4) bzw. der elektrischen Spannung (Vm) des Entladungsmoduls (8) durch die sekundären Regelkreise (17, 18, 19) steuert.

3. Drehflügelflugzeug (G) nach einem der Ansprüche 1 und 2,
**dadurch gekennzeichnet, dass** die elektrische Schaltung (9) eine Kippstufe (20) umfasst, die selektiv die Aktivierung der Entladebetriebsart und die Aktivierung der Nachladebetriebsart des Entladungsmoduls (8) durch den statischen Hauptwandler (13) zulässt, wobei sich die Kippstufe (20) spontan in der Position des Zulassens einer Aktivierung der Nachladebetriebsart befindet und in die Position des Zulassens einer Aktivierung der Entladebetriebsart durch Empfang einer Information (21) versetzt wird, die sich auf die Aktivierung der Startphase des Turbomotors (1) bezieht.

4. Drehflügelflugzeug (G) nach Anspruch 2,
**dadurch gekennzeichnet, dass** in der Nachladebetriebsart der primäre Regelkreis (16) durch einen ersten der sekundären Regelkreise (17) gesteuert wird, der die elektrische Spannung des Entladungsmoduls (8) regelt.

5. Drehflügelflugzeug (G) nach Anspruch 2,
**dadurch gekennzeichnet, dass** in der Entladebetriebsart der primäre Regelkreis (16) von einem zweiten der sekundären Regelkreise (18) gesteuert wird, der in Abhängigkeit von einer elektrischen Referenzspannung die elektrische Spannung des von dem elektrischen Schaltkreis (9) an das Bordnetz (4) über den Verbindungsbus (10) gelieferten elektrischen Stroms regelt, wobei der primäre Regelkreis (16) eine elektrische Spannung des Bordnetzes (4) aufrechterhält, die in der Lage ist, den Betrieb des Anlassers (6) mit einem erforderlichen Antriebsmoment für die Turbine (3) in Abhängigkeit von dem Wert des mindestens einen Parameters (15) zu gewährleisten, der die Entwicklung der Startphase des Turbomotors (1) angibt.

6. Drehflügelflugzeug (G) nach Anspruch 5,
**dadurch gekennzeichnet, dass** die Referenzspannung einen vordefinierten festen Wert hat, der entsprechend dem Drehmoment, das vom Anlasser (6) gemäß seinen technischen Eigenschaften erzeugt werden kann, angegeben ist.

7. Drehflügelflugzeug (G) nach Anspruch 5,
**dadurch gekennzeichnet, dass** die elektrische Referenzspannung durch einen dritten sekundären Regelkreis (19) angegeben wird, der gleichermaßen das Drehmoment (Cd) und/oder die Drehzahl (Rd) des Anlassers (6) zu einem bestimmten Zeitpunkt und/oder die Stärke (Id) des vom Bordnetz (4) an den Anlasser (6) gelieferten elektrischen Stroms berücksichtigt.

8. Drehflügelflugzeug (G) nach einem der Ansprüche 1 bis 7,
**dadurch gekennzeichnet, dass** die Regelvorrichtung (14) eine Funktion aufweist zum Sperren des Unterbrechers (13') unter der Bedingung, dass eine Spannung des Entladungsmoduls (8) einer Spannung innerhalb eines vorbestimmten Bereichs zulässiger Werte entspricht.

9. Drehflügelflugzeug (G) nach einem der Ansprüche 1 bis 8,
**dadurch gekennzeichnet, dass** der Unterbrecher (13') des statischen Hauptwandlers (13) N Phasen aufweist, die aus statischen Leistungsschaltern bestehen, die in einem verschachtelten Modus gesteuert werden.

10. Drehflügelflugzeug (G) nach einem der Ansprüche 1 bis 8,
**dadurch gekennzeichnet, dass** der Unterbrecher (13') des statischen Hauptwandlers (13) N Phasen aufweist, die aus gestuften Hochfrequenztransformatoren bestehen, und dass eine galvanische Trennung zwischen dem Entladungsmodul (8) und dem Verbindungsbus (10) angeordnet ist.

11. Drehflügelflugzeug (G) nach einem der Ansprüche 1 bis 10,
**dadurch gekennzeichnet, dass** ein bidirektionaler statischer Gleichspannungswandler, als statischer Sekundärwandler (22) bezeichnet, zwischen die Hauptquelle (7) und das Bordnetz (4) geschaltet ist und die elektrische Spannung des von der Hauptquelle (7) gelieferten elektrischen Stroms in Abhängigkeit von einer elektrischen Sollspannung des Bordnetzes (4) regelt

12. Drehflügelflugzeug (G) nach einem der Ansprüche 1 bis 11,
**dadurch gekennzeichnet, dass** das Entladungsmodul (8) und der statische Hauptwandler (13) in derselben ersten elektrischen Komponente zusammengefasst sind.

13. Drehflügelflugzeug (G) nach einem der Ansprüche 1 bis 12,
**dadurch gekennzeichnet, dass** die Regelvorrichtung (14) und der statische Hauptwandler (13) in einer gleichen zweiten elektrischen Komponente (12) integriert sind.

14. Drehflügelflugzeug (G) nach einem der Ansprüche 1 bis 13,
**dadurch gekennzeichnet, dass** das Entladungsmodul (8), der statische Hauptwandler (13) und die Regelvorrichtung (14) in einem gleichen elektrischen Gerät (11) zusammengefasst sind.

15. Drehflügelflugzeug (G) nach einem der Ansprüche 1 bis 14,
**dadurch gekennzeichnet, dass** der mindestens eine Parameter (15), der die Entwicklung der Startphase des Turbowellenmotors (1) angibt, wenigstens ein beliebiger von Parametern ist, die umfassen:
- mindestens einen Parameter, der die Drehzahl (Rd) des Anlassers (6) und/oder die Drehzahl der Turbine (3) identifiziert,
- einen Parameter, der das Widerstandsmoment identifiziert, das die Turbine der Drehung des Anlassers entgegensetzt (8),
- einen Parameter, der die Stärke (Id) des vom Bordnetz (4) an den Starter (6) gelieferten elektrischen Stroms identifiziert.

## Claims

1. A rotorcraft (G) having an electric circuit (9) and at least one turboshaft engine (1) comprising a gas compressor (2) and a turbine (3), the turboshaft engine (1) being provided with a starter (6) for driving the gas compressor (2) while starting the turboshaft engine (1), the electric circuit (9) being connected via a connection bus (10) to an onboard electricity network (4) for delivering direct current to operate the starter (6) under dependency of the electric circuit (9), the onboard electricity network (4) being maintained at a setpoint voltage during starting by regulating the delivery of electrical energy to the starter (6) by the electric circuit (9) from various sources of electrical energy, including at least one main source (7) of electrical energy for delivering direct current, and at least one secondary source of electrical energy, operation of the secondary source being placed under the dependency of a bidirectional DC-DC converter according to two operating modes of the secondary source, namely:
- a so-called discharge operating mode in which the bidirectional DC-DC converter controls the delivery of electrical energy from the secondary source as a function of the value of at least one parameter (15) identifying progress in starting the turboshaft engine (1), such that additional electrical energy is delivered by the secondary source to the onboard network (4) while starting the turboshaft engine (1) to supplement the electrical energy supplied to the onboard network (4) by the main source (7), and
- a so-called recharging operating mode in which the bidirectional DC-DC converter regulates recharging of the secondary source from the onboard network (4) with electrical current supplied by the main source (7);
the secondary source of the electric circuit (9) is connected in parallel with the main source (7);
the secondary source groups together discharge members that are connected in series with the bidirectional DC-DC converter on the electric circuit (9);
**characterised in that** the secondary source groups together discharge members that are connected in series on a discharge module (8) of the secondary source and the bidirectional DC-DC converter is a main static converter (13) comprising at least an electrical power architecture and a chopper (13') with N phases shifted by 2n/N; and
a regulator device (14) comprises a primary regulation loop (16) and controls the operation of the electrical power architecture of the main static converter (13), at least by maintaining while starting the turboshaft engine (1), electrical current intensity equivalence between the electrical current intensity of the electric circuit (9) and the electrical current intensity of the onboard network (4), regardless of the mode of operation of the discharge module (8) and by monitoring the voltage (Vm) of the discharge module (8), and the voltage (Vr) of the onboard network (4).

2. Rotorcraft (G) according to claim 1, **characterised in that** the regulator device (14) comprises secondary regulation loops (17, 18, 19) in addition to the primary regulation loop (16) that controls said electrical current equivalence as a function of the secondary regulation loops (17, 18, 19) respectively identifying at least the voltage (Vr) of the onboard network (4) and the voltage (Vm) of the discharge module (8).

3. Rotorcraft (G) according to either claim 1 or claim 2, **characterised in that** the electric circuit (9) comprises a bistable (20) for selectively authorising activation of the discharge mode and activation of the recharging mode of the discharge module (8) by means of the main static converter (13), the bistable (20) spontaneously being in a position for activating the recharging mode and being controlled to take up a position for activating the discharging mode on receiving data (21) relating to activating turboshaft engine (1) starting.

4. Rotorcraft (G) according to claim 2, **characterised in that** in recharging mode, the primary regulation loop (16) is controlled by a first secondary regulation loop (17) regulating the voltage of the discharge module (8).

5. Rotorcraft (G) according to claim 2, **characterised in that** in discharging mode, the primary regulation loop (16) is controlled by a second so-called secondary regulation loop (18), complying with a reference voltage, to regulate the voltage of the electrical current delivered by the electric circuit (9) to the onboard network (4) via said connection bus (10), the primary regulation loop (16) maintaining the onboard network (4) at a voltage suitable for enabling the starter (6) to be operated at a required torque for driving the turbine (3) as a function of the value of said at least one parameter (15) identifying progress in starting the turboshaft engine (1) .

6. Rotorcraft (G) according to claim 5, **characterised in that** the reference voltage is a predefined fixed value identified depending on the required torque to be developed by the starter (6) in compliance with its technical characteristics.

7. Rotorcraft (G) according to claim 5, **characterised in that** the reference voltage is identified by a third secondary regulation loop (19) taking account equally well of the torque (Cd) and/or the speed (Rd) of rotation of the starter (6) at an instant under consideration and/or the intensity (Id) of the electrical current delivered to the starter (6) by the onboard network (4).

8. Rotorcraft (G) according to any one of claims 1 to 7, **characterised in that** the regulator device (14) includes a function of inhibiting said chopper (13') providing a voltage of the discharge module (8) is in compliance with a voltage lying within a predetermined range of acceptable values.

9. Rotorcraft (G) according to any one of claims 1 to 8, **characterised in that** chopper (13') of the main static converter (13) has N phases constituted by static power switches operated in interleaved mode.

10. Rotorcraft (G) according to any one of claims 1 to 8, **characterised in that** the chopper (13') of the main static converter (13) has N phases constituted by staged high frequency transformers with galvanic isolation being interposed between the discharge module (8) and said connection bus (10).

11. Rotorcraft (G) according to any one of claims 1 to 10, **characterised in that** a bidirectional DC-DC static converter referred to as a secondary static converter (22) is interposed between the main source (7) and the onboard network (4) and regulates the voltage of the electrical current delivered by the main source (7) in compliance with a setpoint voltage of the onboard network (4).

12. Rotorcraft (G) according to any one of claims 1 to 11, **characterised in that** the discharge module (8) and the main static converter (13) are grouped together in a common first electrical component.

13. Rotorcraft (G) according to any one of claims 1 to 12, **characterised in that** the regulator device (14) and the main static converter (13) are incorporated in a common second electrical component (12).

14. Rotorcraft (G) according to any one of claims 1 to 13, **characterised in that** the discharge module (8), the main static converter (13), and the regulator device (14) are grouped together in a common piece of electrical equipment (11).

15. Rotorcraft (G) according to any one of claims 1 to 14, **characterised in that** said at least one parameter (15) identifying progress in the stage of starting the turboshaft engine (1) is any one of at least the following parameters:
- at least one parameter identifying the speed (Rd) of rotation of the starter (6) and/or the speed at which the turbine (3) is driven in rotation;
- a parameter identifying the resisting torque opposed by the turbine against being rotated by the starter (8); and
- a parameter identifying the intensity (Id) of the electrical current delivered to the starter (6) by the onboard network (4) .
